# EUROPEAN PATENT APPLICATION

(11) **EP 2 022 965 A1**
(43) Date of publication of application: **11.02.2009**
(21) Application number: 07741985.1
(22) Date of filing: 19.04.2007
(51) Int. Cl.: F02C 7/045, F02C 7/042, F02K 3/02, F04D 29/54

(54) **AXIAL FLOW FLUID DEVICE**

(30) Priority: 31.05.2006 JP 2006151514
(71) Applicant: IHI Corporation, Tokyo 135-8710 (JP)
(72) Inventor: TSUCHIYA, Naoki, Tokyo 135-8710 (JP)
(74) Representative: Waldren, Robin Michael
(86) International application number: PCT/JP2007/058549
(87) International publication number: WO 2007/138802

(57) **Abstract**

An axial flow fluid device in which blade rows (3, 4) having radially-arranged blades (31, 41) are provided in a flow passage (23) of a fluid (Y). The axial flow fluid device includes a turbulent flow eliminating device (8) for eliminating turbulent flow components (Y1 to Y4) in the fluid (Y) supplied to the blade rows (3, 4). The axial flow fluid device reduces a broadband noise component out of components of noise generated by interference between the fluid and the blades.

## Description

### [TECHNICAL FIELD]

The present invention relates to an axial flow fluid device in which a fluid flows in an axial direction of the device.
This application claims priority of Japanese Patent Application No. 2006-151514 filed May 31, 2006, the content of which is incorporated herein by reference in its entirety.

### [BACKGROUND ART]

Some axial flow fluid devices, like a jet engine, a compressor and a turbine, have a rotor blade row and a stator blade row arranged in an axial direction of the device (for example, United States Patent No. 6004095).
The rotor blade row and the stator blade row are placed within a flow passage of the fluid. The rotor blade row is formed of several rotor blades and the stator blade row is formed of several stator blades. A fluid flows and passes the rotor blade row and the stator blade row in the flow passage to the downstream of the blade rows.

In such an axial flow fluid device, when the fluid flows through the flow passage, the fluid and the rotor blade, or the fluid and the stator blade interfere to generate noise.
To address the noise problem, a technique is proposed to eliminate some components of the noise generated by interference between the fluid and the blades using an acoustic liner disposed in the flow passage.
Patent Document 1: United States Patent No. 6004095

### [DISCLOSURE OF THE INVENTION]

### [PROBLEM TO BE SOLVED BY THE INVENTION]

The acoustic liner, however, absorbs components of a specific frequency range out of components of generated noise.
Noise generated by interference between the fluid and the blades has a tone noise component which is especially large in a specific frequency range, and a broadband noise component which exists on average in a broad frequency range. The acoustic liner absorbs the tone noise but does not absorb the broadband noise. Patent Document 1 discloses an invention which reduces noise in an axial flow fluid device. This invention is also directed to reducing the tone noise.
Accordingly, existing technology is directed to reducing the tone noise component, but not to reducing the broadband noise component.

In view of the aforementioned, an object of the invention is to reduce a broadband noise component out of components of noise generated by interference between the fluid and the blades.

### [MEANS FOR SOLVING THE PROBLEM]

To achieve the above object, the invention provides an axial flow fluid device in which a blade row having radially-arranged blades is provided in a flow passage of a fluid. The device includes a turbulent flow eliminating device for eliminating a turbulent flow component in the fluid supplied to the blade row.
With the thus-structured invention, the turbulent flow component in the fluid supplied to the blade row is eliminated by the turbulent flow eliminating device.

In the invention, the turbulent flow eliminating device may include an inlet port through which the turbulent flow component is introduced, an outlet port through which the turbulent flow component is discharged, and a passage portion which connects the inlet port and the outlet port.

In the invention, the inlet port may be radially formed around the entire circumference of the inner wall portion of the flow passage.

In the invention, the inlet port may face a direction in which the fluid flows in the flow passage.

In the invention, an opening and closing device for opening and closing the inlet port may further be provided.

### [EFFECT OF THE INVENTION]

According to the invention, the turbulent flow component in the fluid supplied to the blade row is eliminated.
The broadband noise component is generated by interference between the turbulent flow component in the fluid supplied to the blade row and the blades constituting the blade row. According to the invention, the turbulent flow component in the fluid supplied to the blade row is eliminated and thus the broadband noise component out of the components of noise generated by interference between the fluid and the blades is reduced.

### [BRIEF DESCRIPTION OF THE DRAWINGS]

FIG. 1 is a partially cross-sectional view showing a schematic structure of a jet engine according to an embodiment of the invention.
FIG. 2 is a cross-sectional view taken along line A-A in FIG. 1.

### [BRIEF DESCRIPTION OF THE REFERENCE NUMERALS]

1: jet engine (axial flow fluid device)
2: casing
23: flow passage
24: inner wall portion
8: turbulent flow eliminating portion (turbulent flow eliminating device)
811, 821, 831 and 841: inlet ports
812 and 822: outlet ports
813, 823, 832 and 842: passage portions
3: rotor blade row (blade row)
31: rotor blade
4: stator blade row
41: stator blade
L: axial direction
Y: air (fluid)
Y1 to Y4: turbulent flow components

### [BEST MODE FOR CARRYING OUT THE INVENTION]

Referring now to the drawings, an embodiment of the axial flow fluid device according to the invention will be described. In the embodiment described below, a jet engine is illustrated as an example of the axial flow fluid device according to the invention. In the drawings, the members are not to scale, but are depicted in a visually understandable manner.

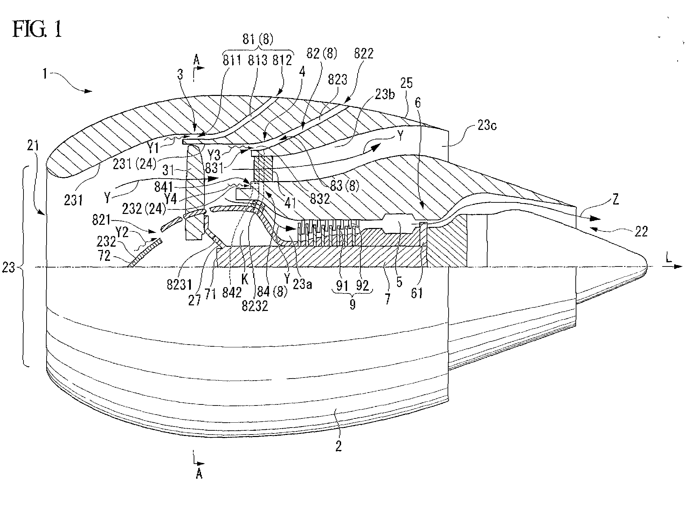

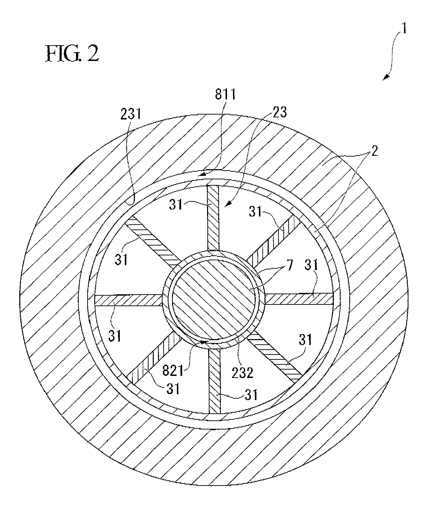

FIGS. 1 and 2 are cross-sectional views showing a schematic structure of a jet engine 1 according to the present embodiment. FIG 1 is a partially cross-sectional view along an axial direction L of the jet engine 1. FIG. 2 is a cross-sectional view taken along line A-A in FIG 1 (i.e., a cross-sectional view along the direction perpendicular to the axial direction L).
As shown in the drawings, the jet engine 1 according to the present embodiment includes a casing 2, a rotor blade row 3 (a blade row), a stator blade row 4 (a blade row), a combustion chamber 5, a turbine blade row 6, a shaft 7 and a compressor 9.

The casing 2 forms an outline of the jet engine 1 and houses the rotor blade row 3, the stator blade row 4, the combustion chamber 5, the turbine blade row 6 and the shaft 7. The casing 2 has openings at both axial direction L end portions. One of the openings is formed as an air intake port 21 through which the open air is taken into the jet engine 1. The other of the openings is formed as an exhaust nozzle 22 through which combustion gas Z is injected from the jet engine 1. A flow passage 23 which connects the air intake port 21 and the exhaust nozzle 22 is formed inside of the casing 2. The flow passage 23 is branched into a core duct 23a and a bypass duct 23b downstream of the rotor blade row 3. The core duct 23a is connected to the exhaust nozzle 22. An exhaust end of the bypass duct 23b is formed as a fan nozzle 23c.
In the present embodiment, the casing 2 includes a nacelle located upstream of the rotor blade row 3.

The rotor blade row 3 is formed of radially-arranged rotor blades (blades) 31 as shown in FIG. 2. Each of the rotor blades 31 is provided in the flow passage 23 inside of the casing 2 and is fixed to the shaft 7 running in the axial direction L with a negative pressure surface facing the air intake port 21 and a positive pressure surface facing the exhaust nozzle 22.

The stator blade row 4 is disposed downstream of the rotor blade row 3 with a predetermined interval from the rotor blade row 3. The stator blade row 4 is formed of radially-arranged stator blades 41.
Each of the stator blades 41 is provided in the bypass duct 23b and is fixed to the casing 2 at an angle so as to straighten the air Y supplied from the rotor blade row 3 and prevent a backward flow of the air Y from downstream.

In the compressor 9, compressor rotor blades 91 and compressor stator blades 92 are alternately arranged in the core duct 23a. The compressor rotor blade 91 is fixed with respect to the shaft 7. The compressor stator blade 92 is fixed with respect to the casing 2.

The combustion chamber 5 is disposed downstream of the compressor 9 where the core duct 23a is partially extended in diameter. Fuel can be supplied to the combustion chamber 5 from outside. The combustion chamber 5 has an unillustrated ignition device. The air Y supplied from the compressor 9 is mixed with the fuel and burned in the combustion chamber 5. The combustion gas Z generated during the combustion is discharged from the combustion chamber 5 into the flow passage 23.

The turbine blade row 6 is provided downstream of the combustion chamber 5 and is formed of radially-arranged turbine blades 61. Each of the turbine blades 61 is provided in the flow passage 23 formed inside of the casing 2, and is fixed with respect to the shaft 7 at an angle such that, upon receipt of the combustion gas Z supplied from the combustion chamber 5, the turbine blade 61 provides power to rotate the shaft 7 in one predetermined direction.

As described above, the shaft 7 runs in the axial direction L and has the rotor blades 31 and the turbine blades 61 fixed thereon. The shaft 7 is fixed with respect to the casing 2 via an unillustrated bearing. A spinner 72 is connected to an end portion 71 of the shaft 7.

The jet engine 1 according to the present embodiment includes plural turbulent flow eliminating portions (turbulent flow eliminating device) 8. The turbulent flow eliminating portion 8 is formed of a first turbulent flow eliminating portion 81 to a fourth turbulent flow eliminating portion 84.

The first turbulent flow eliminating portion 81 is formed of an inlet port 811, an outlet port 812 and a passage portion 813.
The inlet port 811 is provided upstream of the rotor blade row 3. As shown in FIG. 2, the inlet port 811 is radially formed around an entire inner wall portion 231 (i.e., an inner wall portion 24 of the casing 2) of the flow passage 23 distal from the axis. The inlet port 811 faces the direction in which the air Y flows (i.e., the axial direction L) as shown in FIGS. 1 and 2.
The outlet port 812 is exposed to an outer wall portion 25 of the casing 2 as shown in FIG. 1. The passage portion 813 is provided to connect the inlet port 811 and the outlet port 812. The outlet port 812 and the passage portion 813 are arranged discontinuously in the radial direction. With this configuration, the casing 2 is not completely separated and is kept integral.

A second turbulent flow eliminating portion 82 is formed of an inlet port 821, an outlet port 822 and a passage portion 823.
The inlet port 821 is provided upstream of the rotor blade row 3. As shown in FIG. 2, the inlet port 821 is radially formed around an entire inner wall portion 232 (i.e., a surface portion of the spinner 72) of the flow passage 23 proximal from the axis. The inlet port 821 faces the direction in which the air Y flows (i.e., the axial direction L) as shown in FIGS. 1 and 2.
The outlet port 822 is exposed to the outer wall portion 25 of the casing 2 as shown in FIG. 1. The passage portion 823 is provided to connect the inlet port 821 and the outlet port 822. The outlet port 822 and the passage portion 823 are arranged discontinuously in the radial direction. With this configuration, the casing 2 is not completely separated and is kept integral.
The passage portion 823 is formed to straddle some area of the core duct 23a. A part of the passage portion 823 includes a through-hole 8231 formed in the fan disk 27 and a through-hole 8232 formed in the inner wall portion of the flow passage 23. The through-hole 8231 and the through-hole 8232 are connected together via a space K defined by the inner wall portion of the flow passage 23.

A third turbulent flow eliminating portion 83 is formed of an inlet port 831, a passage portion 832, the outlet port 822 and the passage portion 823 of the second turbulent flow eliminating portion 82.
The inlet port 831 is formed between the rotor blade row 3 and the stator blade row 4, and is radially formed around an entire inner wall portion 231 of the flow passage 23 distal from the axis. The inlet port 831 faces the direction in which the air Y flows (i.e., the axial direction L).
The passage portion 832 is connected to the passage portion 823 of the second turbulent flow eliminating portion 82.

A fourth turbulent flow eliminating portion 84 is formed of an inlet port 841, a passage portion 842, the outlet port 822 and the passage portion 823 of the second turbulent flow eliminating portion 82, and the passage portion 832 of the third turbulent flow eliminating portion 83.
The inlet port 841 is formed between the rotor blade row 3 and the stator blade row 4, and is radially formed is around the entire inner wall portion 232 (i.e., the inner wall portion 24) of the bypass duct 23b. The inlet port 841 faces the direction in which the air Y flows (i.e., the axial direction L).
The passage portion 842 is connected to the passage portion 832 of the third turbulent flow eliminating portion 83.

In the thus-structured jet engine 1 according to the present embodiment, the shaft 7 is first rotated to cause the rotor blades 31 fixed to the shaft 7 to rotate around the axis. Thus open air (the air Y) is taken from the air intake port 21 into the jet engine 1. In this manner, a flow of the air Y along the axial direction L is generated in the flow passage 23 of the casing 2.

The air Y taken into the jet engine 1 passes the rotor blade 31, and then partially flows into the core duct 23a and partially flows into the bypass duct 23b.
The air Y that flows into the bypass duct 23b passes the stator blade 41 and then is discharged outside from the fan nozzle 23c. The air Y that flows into the core duct 23a is compressed by the compressor 9 and then supplied to the combustion chamber 5. The air Y supplied into the combustion chamber 5 is mixed with the fuel and burned in the combustion chamber 5. In this manner, the combustion gas Z is generated. The combustion gas Z injected from the exhaust nozzle 22 provides the jet engine 1 with thrust.
The combustion gas Z passes the turbine blade 61 on the way to the exhaust nozzle 22 from the combustion chamber 5. Upon receipt of the combustion gas Z, the turbine blade 61 provides power to the shaft 7 to rotate the same in one direction. As a result, the shaft 7 is rotated to make the rotor blades 31 fixed to the shaft 7 continuously rotate.

In the thus-structured jet engine 1 according to the present embodiment, when the rotor blade 31 is rotated to cause the air Y to flow into the flow passage 23 from the air intake port 21, a turbulent flow component is generated at an area where the air Y and the inner wall portion 24 of the flow passage 23 are in contact with each other.
Here, in the jet engine 1 according to the present embodiment, the inlet port 811 of the first turbulent flow eliminating portion 81 is provided upstream of the rotor blade row 3, and is radially formed around the entire inner wall portion 231 of the flow passage 23 distal from the axis. In addition, the inlet port 821 of the second turbulent flow eliminating portion 82 is provided upstream of the rotor blade row 3, and is radially formed around an entire inner wall portion 232 of the flow passage 23 proximal from the axis.
With this configuration, the turbulent flow component Y1 generated at the area where the air Y and the inner wall portion 231 (the inner wall portion 24) are in contact with each other is introduced in the inlet port 811 of the first turbulent flow eliminating portion 81, and is discharged from the outlet port 812 via the passage portion 813. The turbulent flow component Y2 generated at the area where the air Y and the inner wall portion 232 (the inner wall portion 24) are in contact with each other is introduced in the inlet port 821 of the second turbulent flow eliminating portion 82, and is discharged from the outlet port 822 via the passage portion 823.
In this manner, the turbulent flow components Y1 and Y2 in the flow of the air Y are eliminated by the first turbulent flow eliminating portion 81 and the second turbulent flow eliminating portion 82. As a result, since the rotor blade row 3 is supplied with the air from which the turbulent flow components which otherwise cause broadband noise have been eliminated, the broadband noise components out of the components of noise generated by the interference between the air Y and the rotor blades 31 can be reduced.

In the jet engine 1 according to the present embodiment, the inlet port 831 of the third turbulent flow eliminating portion 83 is formed between the rotor blade row 3 and the stator blade row 4, and is radially formed around an entire inner wall portion 231 of the flow passage 23 distal from the axis. The inlet port 841 of the fourth turbulent flow eliminating portion 84 is formed between the rotor blade row 3 and the stator blade row 4, and is radially formed around the entire inner wall portion 232 (i.e., the inner wall portion 24) of the bypass duct 23b.
With this configuration, in an area between the rotor blade row 3 and the stator blade row 4, the turbulent flow component Y3 generated at the area where the air Y and the inner wall portion 231 (the inner wall portion 24) are in contact with each other is introduced in the inlet port 831 of the third turbulent flow eliminating portion 83, and is discharged from the outlet port 822 via the passage portions 832 and 823. In the area between the rotor blade row 3 and the stator blade row 4, the turbulent flow component Y4 generated at the area where the air Y and the inner wall portion 232 (the inner wall portion 24) are in contact with each other is introduced in the inlet port 841 of the fourth turbulent flow eliminating portion 84, and is discharged from the outlet port 822 via the passage portions 842, 832 and 823.
In this manner, the turbulent flow components Y3 and Y4 of the flow of the air Y between the rotor blade row 3 and the stator blade row 4 are eliminated by the third turbulent flow eliminating portion 83 and the fourth turbulent flow eliminating portion 84. As a result, since the stator blade row 4 is supplied with the air from which the turbulent flow components which otherwise cause broadband noise have been eliminated, the broadband noise components out of the components of noise generated by the interference between the air Y and the stator blades 41 can be reduced.

In the jet engine 1 according to the present embodiment, the inlet ports 811, 821, 831 and 841 of the turbulent flow eliminating portion 8 is radially formed around the entire inner wall portion 24 of the flow passage 23. With this configuration, the turbulent flow components can be eliminated radially around the entire inner wall portion 24 of the flow passage 23. Thus, the turbulent flow components can be reliably eliminated.
The inlet ports 811, 821, 831 and 841 face along the direction in which the air Y flows (axial direction L). The turbulent flow components Y1 to Y4 in the flow of the air Y can be smoothly taken through the inlet ports 811, 821, 831 and 841. Accordingly the turbulent flow components Y1 to Y4 can be eliminated without disturbing the flow of the air Y.

The preferred embodiment of the axial flow fluid device according to the invention has been described with reference to the drawings. It should be noted, however, that the invention is not limited to the described embodiment. The configurations and the combinations of the described embodiment are illustrative only, and therefore can be variously changed according to, for example, the design demand without departing from the spirit and the scope of the invention.

For example, in the described embodiment, the jet engine is illustrated as one example of an axial flow fluid device of the invention. The invention, however, is not limited thereto and may also be applied to other axial flow fluid devices such as a compressor and a turbine.

A forced flow device, such as a pump, may be provided in a middle of each of the passage portions 813, 823, 832 and 842 of the turbulent flow eliminating portion 8 of the jet engine 1 according to the described embodiment in order to forcibly eliminate the turbulent flow components Y1 to Y4 of the air Y.

An opening and closing device may also be provided for opening and closing the inlet ports 811, 821, 831 and 841 of the turbulent flow eliminating portion 8 of the jet engine 1 according to the described embodiment.
With the opening and closing device, the inlet ports 811, 821, 831 and 841 can be opened and closed depending on the state of the jet engine 1. For example, in an environment where broadband noise does not matter, the inlet ports 811, 821, 831 and 841 may be closed by the opening and closing device to improve engine efficiency.
The opening and closing device may be a mechanism like a shutter mechanism of a camera for opening and closing a substantially circular opening.

In the described embodiment, the turbulent flow components Y1 to Y4 of the air Y are discharged only through the outlet ports 812 and 822. However, the turbulent flow components Y1 to Y4 of the air Y may alternatively used to control a flow field in the jet engine 1 as, for example, cooling air.

In the described embodiment, the turbulent flow component Y2 is discharged to a downward component via the through-hole 8231 formed in the fan disk 27 as shown in FIG. 1. The invention, however, is not limited to the configuration. For example, a through-hole may be formed in a platform of the rotor blade 31 through which the turbulent flow component Y2 may be discharged to a downward component.

### [INDUSTRIAL APPLICABILITY]

According to the axial flow fluid device according to the invention, the broadband noise components out of the components of noise generated by the interference between the fluid and the blades can be reduced.

## Claims

1. An axial flow fluid device in which a blade row having radially-arranged blades is provided in a flow passage of a fluid, the device comprising:
a turbulent flow eliminating device for eliminating a turbulent flow component in the fluid supplied to the blade row.

2. An axial flow fluid device according to claim 1, wherein the turbulent flow eliminating device comprising:
an inlet port through which the turbulent flow component is introduced;
an outlet port through which the turbulent flow component is discharged; and
a passage portion which connects the inlet port and the outlet port.

3. An axial flow fluid device according to claim 2 wherein the inlet port is radially formed around the entire circumference of the inner wall portion of the flow passage.

4. An axial flow fluid device according to claim 2 or 3, wherein the inlet port faces a direction in which the fluid flows in the flow passage.

5. An axial flow fluid device according to claim 2 or 3, further comprising an opening and closing device for opening and closing the inlet port.

6. An axial flow fluid device according to claim 4, further comprising an opening and closing device for opening and closing the inlet port.
